(19)

(11) **EP 3 656 524 B1**

(12) **EUROPEAN PATENT SPECIFICATION**

(45) Date of publication and mention of the grant of the patent: **06.01.2021 Bulletin 2021/01**

(21) Application number: **18207492.2**

(22) Date of filing: **21.11.2018**

(51) Int Cl.:
***B29B 7/92*** *(2006.01)* ***B29B 7/48*** *(2006.01)*
***B29B 7/60*** *(2006.01)* ***B29B 7/72*** *(2006.01)*
***B29B 7/74*** *(2006.01)* ***B29B 7/84*** *(2006.01)*
***B29B 7/86*** *(2006.01)* ***B29B 7/90*** *(2006.01)*
***B29B 7/94*** *(2006.01)* ***B29C 48/00*** *(2019.01)*
***C08L 1/02*** *(2006.01)* ***C08J 3/20*** *(2006.01)*
***C08J 3/205*** *(2006.01)* ***C08L 97/02*** *(2006.01)*
***B29C 48/02*** *(2019.01)* ***B29C 48/285*** *(2019.01)*
***B29C 48/76*** *(2019.01)* ***B29C 48/92*** *(2019.01)*
*B29C 48/43* *(2019.01)* *B29K 601/00* *(2006.01)*

(54) **METHOD OF MANUFACTURING BIOCOMPOSITE MATERIALS COMPRISING CELLULOSE**

VERFAHREN ZUR HERSTELLUNG VON BIOVERBUNDMATERIALIEN ENTHALTEND ZELLULOSE

PROCÉDÉ DE FABRICATION DE MATÉRIAUX BIOCOMPOSITES COMPRENANT DE LA CELLULOSE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application: **27.05.2020 Bulletin 2020/22**

(73) Proprietor: **Biofibre GmbH**
**84032 Altdorf (DE)**

(72) Inventor: **Dörrstein, Jörg**
**94315 Straubing (DE)**

(74) Representative: **Vossius & Partner**
**Patentanwälte Rechtsanwälte mbB**
**Siebertstrasse 3**
**81675 München (DE)**

(56) References cited:
**WO-A1-95/04779** **DE-A1- 10 022 008**
**DE-A1-102004 034 039** **US-A1- 2016 039 981**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 656 524 B1

## Description

The present invention relates to a method for manufacturing a composite material from a binder comprising a polymer, a cellulosic material and a hydrophobic agent.

Composites composed of thermoplastic polymers and materials which are sourced from living organisms (such as natural fiber plastic composites (NFPC) or wood-plastic composites (WPC)) are nowadays frequently utilized for the generation of products for various fields. These include composite materials made out of materials which are sourced from plants such as wood fiber/wood flour and/or natural fiber in combination with a thermoplastic binder. In addition, cellulosic material from living organisms can be obtained from the synthesis of cellulose by bacteria. Such materials are often used for applications in which the biodegradability of the products plays a vital role, although their applications are not restricted to this property. Examples for biodegradable products are mulch foils, flower pots, coffee capsules, urns, disposable tableware, biowaste bags, rigid and flexible food packaging, or golf tees.

Hydrolysis, either catalyzed by enzymes ('enzymatic hydrolysis' by enzymes such as esterases) or at elevated temperatures, e.g. 50-60 °C in industrial compost, in the presence of water ('hydrodegradation') disintegrates so called biodegradable polymers (e.g. aliphatic polyesters), while microorganisms (bacteria, fungi) incorporate these fragments for full conversion to harmless substances such as water, $CO_2$, biomass and minerals ('biodegradation').

Since the required properties of a product are largely dependent on the application, composites made out of different components in varying weight fractions are frequently seen as a convenient and low cost possibility to obtain materials with tailored properties. One common economical and labor extensive way to adjust material properties towards specific material characteristics is the melt compounding of polymers with formulation aids, such as plasticizers, fillers or other additives using an extruder. Very often plant-derived cellulosic materials are used to fill or reinforce plastics for the generation of partly or all-biobased (semi-finished or finished) products.

The class of plant-derived and microbe-derived cellulosic materials (named hereafter 'cellulosic material') includes materials consisting of cell wall materials of land and water plants as well as synthesized extracellular materials of bacteria, predominately consisting of cellulose and optionally other biopolymers like hemicellulose and lignin as well as extractives and ash. Cellulosic materials consist to a considerable proportion of hygroscopic biogenic substances, e.g. cellulose and/or hemicelluloses. Hygroscopic biogenic substances readily take up moisture in high quantities. Typically 5-8 % of moisture, in hemicellulose-rich materials up to 12 % of moisture is taken up in minutes to hours.

For the fabrication of such composites, continuous processes are often preferred over intermitting processes due to e.g. time saving, automatization and product quality control. Intermitting processes, which are also called batch processes, typically contain the steps drying, optionally modification of the feedstock materials and compounding. In the last decades continuous compounding processes have been developed. During compounding, both the raw materials and the desired products require adjusted processing and equipment configuration on continuous processing routes in order to yield high quality and high performance materials. Therefore a multitude of extrusion equipment has evolved in the last decades (Chris Rauwendaal, Polymer Extrusion, 5. edition, 01/2014, 950 pages).

A major challenge in the manufacture of cellulosic material containing composites on conventional extruders is related to the high moisture uptake of the cellulosic material. The cellulosic materials should be as dry as possible in many cases, for the ease of mixing of the cellulosic material with the binder during a compounding operation and to provide a maximum extruder output rate (throughput)..

If the (residual) water content of the cellulosic material is too high, many binders (especially polyesters) tend to degrade during the blending operation or in subsequent material processing operations due to the sensitivity of thermoplastic polyesters to hydrolysis upon contact with water. Examples for such moisture sensitive polyesters are Polylactic acid (PLA), Polybutylene terephthalate (PBT), Polyethylene terephthalate (PET), Polytrimethylene terephthalate (PTT), Polycaprolactone (PCL), Polycarbonate (PC), Polybutylene succinate (PBS), Polybutyrate (PBAT), natural biopolyesters such as Polyhydroxyalkanoates (PHA) as well as natural heteropolymers with repeating ester linkages on the backbone, such as e.g. Suberin and Cutin. As can be deduced from the term 'polyester' they contain repeating ester linkages in their main chain. Synthetic polyesters are often produced by step-wise polycondensation of bifunctional monomers. The chemical equation illustrates the two-way formation and cleavage of ester bonds: (n+1) $R(OH)_2$ + n R'$(COOH)_2 \rightleftarrows$ HO (ROOCR'COO) n ROH + 2n $H_2O$, where $R(OH)_2$ and $R'(COOH)_2$ denote bifunctional carboxylic acids and alcohols, respectively. This means that the esterification reaction to form covalent ester bonds is associated with the abstraction of water. Typical for ester bonds, this is a reversible reaction, leading to a reduction in the degree of polymerization (i.e. the number of monomeric units in a polymer molecule) upon contact with water. This water-mediated reverse reaction (hydrolysis) is accelerated at higher temperatures. With the proceeding hydrolysis, more and more polar alcohol and carboxylic acid functional groups are generated which increasingly render the material hydrophilic and thus the water uptake is likely to be increased. Therefore hydrolysis need not to be neglected when using wet cellulosic materials in polyester containing composites especially once exposed to the conditions typically encountered in compounding processes (high heat and high mechanical energy input).

For several binders, the above mentioned moisture-induced reactions may have a considerably high impact on the mechanical characteristics of the end product. The degradation of the binder by hydrolysis reactions or frictional chain scission may be a problem during downstream processing operations of the composite materials. On convenient plastic processes, such as injection molding or extrusion, a pre-damage of the polymer may lead to severe disadvantages and restrictions in regard of e.g. process stability and processing window (tool temperature, cooling time), respectively, which may lead to inconstancies in the rheological properties, i.e. different flow properties. Moreover, further key material properties are affected by polymer degradation such as reduction of shear and extensional viscosity, crystallization rate, mechanical properties (reduced ultimate strength, elongation at break, stiffness and enhanced brittleness), as well as color variations. A consistent product quality is therefore scarcely possible.

Furthermore, a strong hydrophilicity (aptness for water uptake when being in contact with water) of semi-finished products (e.g. films, granulates, profiles) and finished products (cutlery, cups, straws, cutlery, cocktail stirrer) is often undesired due to water-favored effects like e.g. swelling, lubrication and creep, and leaching. The hydrophilicity of NFPC and WPC is highly related to the hydrophilicity of the cellulosic material.

The continuous removal of moisture from cellulosic materials prior to feeding the extruder can be accomplished by several stand-alone devices such as pre-heaters, rotary dryers or infrared rotating drums. In Gardner DJ, Murdock D (2002) Extrusion of Wood Plastic Composites; http)://www.entwoodllc.com/PDF/Extrusion%20Paper%2010-11-02.pdf; 05.04.2017; (referred to as Gardner 2002), an apparatus is described in which a parallel 40:1 L/D co-rotating twin screw extruder is coupled with a 10:1 L/D single screw extruder in order to process wood particles or fiber at ambient moisture content. A screw or a pack of screws for extrusion can be characterized by its/their diameter D (taken at the tip of the flights) and its/their axial length L (barrel length) and is usually referred to by means of the length-to-diameter ratio (L/D). Here the twin screw extruder is used for the drying operation while a hot melt is generated in the attached single screw extruder. Other disadvantages are related to the greater risk of burning due to high temperatures in the extruder barrel.

In another apparatus (Woodtruder™) which has been previously described (Gardner 2002), a parallel 28:1 L/D counter-rotating twin screw extruder is used for the drying operation while the binder is plasticized in a 75 mm single-screw extruder. Thereafter, the materials are mixed in their natural states and finally, the compound is degassed by vacuum venting. However, the screws of the twin-screw extruder have to be actively cooled to prevent wood degradation and to enable a low binder temperature after the materials are mixed. Furthermore, an adequate mixing/homogenization of the main polymer with other polymers or additives is limited due to the single-screw nature of the extruder.

WO 95/04779 A1 describes a method for preparing a biocomposite particulate material comprising discrete fiber-reinforced protein-based particles. The method comprises the steps of (a) preparing an aqueous legume-based resin having a pH of about 10-14; and (b) combining a fibrous cellulosic material with the aqueous legume-based resin in an amount and manner effective to form discrete biocomposite particles having a moisture content of about 55-75%, a particle size of no greater than about 0.5 inch (1.3 cm), and a ratio of cellulose solids to resin solids of about 0.8:1.0 to 1.5:1.0.

However, these drying operations often possess the risk of dust-formation and -explosion, which make them the most potentially dangerous parts of the extrusion process. Moreover, almost fully dried and non-treated fibers are leading to severe polymer chain degradation due to the formation of topological entanglements at the fiber-binder interface leading to similar issues in downstream processes as mentioned above.

It is an object of the present invention to improve the known methods for manufacturing a composite material composed of a binder comprising a polymer and cellulosic material in an extrusion process.

The problem is solved by the invention according to the independent claim.

Particularly, the invention relates to a method for manufacturing a composite material, comprising:

a) Plasticizing a binder in a first extruder, wherein the binder comprises a polymer;

b) Providing a mixture of a cellulosic material and a hydrophobic agent dissolved and/or dispersed in a liquid carrier;

c) Mechanically shearing and drying the mixture in a second extruder whereby liquid is at least partly extracted from the mixture or is not present in liquid form anymore; and

d) Blending the dried mixture with the plasticized binder.

The inventive method is advantageous in that it facilitates a continuous process to fabricate hydrophobic natural fiber plastic composites (NFPC), hydrophobic wood plastic composites (WPC) and hydrophobic cellulose composites from cellulosic materials sourced from living organisms, with resulting superior product qualities due to a reduction of water uptake from the environment and a reduction of chain scission in the polymer binder through the modification of the cellulosic material with a hydrophobic agent prior to the mixing with the plasticized polymer binder.

The binder may comprise a thermoplastic polymer. The binder may comprise PLA, PCL, PBS, PHBH, PBAT, PBSA, PHB, PHBV, PBT, PET, PTT, PC, natural biopolyesters such as polymers from the group of Polyhydroxyalkanoates (PHA) such as PHB, PHBV, PHBH, as well as natural heteropolymers with repeating ester linkages on the backbone, such as Suberin (Sub), and Cutin (Cut), and/or combinations thereof. The abbreviations above and throughout the description are explained in the list of abbreviations at the end of the description. Preferably, the binder may comprise Polylactic acid (PLA), Polybutylene succinate (PBS), Poly(butylene succinate-co-adipate) (PBSA), Polyhydroxybutyrate (PHB), Poly(3-hydroxybutyrate-co-3 -hydroxyvalerate) (PHBV), Poly(3-hydroxybutyrate-co-3-hydroxyhexanoate) (PHBH), Polycaprolactone (PCL), Polybutylene adipate terephthalate (PBAT). Preferable combinations are PLA/PBS, PLA/PBSA, PBAT/PHBH, and PLA/PCL. Each of these combinations, as well as other combinations, may be used with a weight ratio (w/w) of 80/20, 50/50, 20/80.

Additionally or alternatively, the polymer may be a polyester, preferably one of the above mentioned polyesters, with a mass average molecular weight $M_w$ of 80,000 to 1,000,000 g/mol.

The binder is plasticized in an extruder (step a) and the mixture of a cellulosic material and a hydrophobic agent dissolved and/or dispersed in a liquid carrier is sheared and dried in an extruder (step b).

Extrusion techniques provide an unusual combination of high compression, shear and mixing forces combined with high temperatures which are readily achieved in this equipment. The advantages over intermitting processes where shearing is a key aspect such as in ball milling are the ability of a controlled shear intensity, temperature, degassing and residence time as well as an interruption of streamlines.

Extrusion is a family of continuous processes in which a material or a combination of materials is forced through constrained spaces. Compression forces can be generated by a reduction in screw channel depth as well as the ratio of barrel diameter to screw diameter. The hereby attained pressure build-up combined with the mechanical action and higher temperature is often used for reactive extrusion, where polymer functional groups undergo chemical reactions during the process. This is realized by subjecting the material to shearing and compression forces due to the presence in the screw design of mixing and kneading elements and elements with reduced open volume. The residence times of the materials in extruders are typically only a few minutes or even seconds, but may be up to hours depending on the setup of the extruder assembly and processing parameters applied.

A multi-screw extruder (such as described in US 7,080,935 B2) is a continuous processing device, wherein more than two shafts are arranged in a crown-like manner in a cavity of an extruder housing and rotate typically in the same direction axially to the direction of the extruder. Each screw carries a number of processing screw elements of which some have a conveying effect and others have a mixing and/or shearing effect. For the screws which possess a conveying effect, the screw design is decisive to fill the processing spaces of a multi-screw device.

By employing screws which engage in a non-sealing manner, a material transfer is facilitated from the inner processing chamber inside the crown to the outer processing chamber outside the crown and vice versa. This configuration is particularly advantageous in the feed zone of the extruder to fully facilitate product exchange between the process spaces and thus taking advantage of the process space volume and furthermore to interrupt streamlines. One possibility to exchange material is described in DE-196 04 228 where a conveying screw element is exchanged by a spacer sleeve and a smooth outer cylinder wall.

Additionally or alternatively, the drying of the mixture of a cellulosic material and a hydrophobic agent dissolved and/or dispersed in a liquid carrier (step c) is preferably performed in a deliquification extruder and optionally comprises heating the mixture.

Deliquification extruders according to the invention are devices used for example in polymerization processes where reactions are conducted in solution. This can be either in form of a liquid monomer being polymerized or in combination with a solvent (monomer is dissolved in a solvent). Thereafter, monomers and solvents have to be removed from the polymer by e.g. evaporation, which is typically accelerated by drastic pressure change and elevated temperatures. This evaporation is typically conducted in deliquification extruders.

An application for a deliquification extruder is the fabrication of thermoplastic materials, in particular when residual gaseous monomers and residual solvents have to be removed. After their removal, they can be precipitated from its gaseous to its liquid state in a system involving heat transfer such as in a condenser. The screws are commonly referred to be among the decisive parts of the extruder and therefore their design is critical to the success of the extrusion system.

The setup of a deliquification extruder is preferably in the way that the material which is to be degassed, is first conveyed from the drive side and a downstream pressure build-up is successively realized. The pressure build-up is preferably generated in a way that the pressure is higher than the specific evaporation pressure of the liquid phase. Thereafter, a drastic pressure change may be generated by using deep-cut screw elements. In this so called deliquification zone, the removal of monomers and solvents in the form of steam and gas can be realized in atmospheric or low pressure conditions by employing vents in the extruder cylinder. To prevent material flow in liquid and gaseous form towards the gear box, mechanical seals can be implemented. To elevate the degassing performance in extruders, the degassing zones are preferably equipped with enlarged screw and cylinder diameters.

As the mixture is under pressure in the first zone(s) and is depressurized in a subsequent zone, there is a risk that the sudden decrease in pressure leads to a sudden pressure drop and solid particles (treated cellulosic material) may be removed from the main stream towards the vents.

To avoid solid material loss during deliquification by applying a vacuum, vents are preferably covered by a metal-wire-mesh composite sheet, such as the ones described in EP 1400337 B1 and/or by a material which allows the gaseous phase to be removed through a micro-porous cylinder wall.

Preferably, the method is carried out continuously and the dried mixture is not exposed to the atmosphere between steps c) and d).

The cellulosic material for the inventive method may be produced from land plants by physical, chemical, thermal or combined thermo-chemical and physico-chemical routes. However, plants of other habitats, such as water plants, are also suitable. Furthermore, cellulosic material may be obtained from living organisms through the synthesis of cellulose by bacteria. Cellulosic material may be available in different geometries, depending on the mean length-to-diameter ratios (also called aspect ratio and abbreviated 1/d). The geometries may be differentiated into fibers (1/d > 10) and particles (1/d < 10). For example, cellulosic material derived from wood may be used. Wood particles may show sizes in a range from 20 mesh corresponding to a sieve pore width of 0.841 mm (also classified as coarse) to 200 mesh corresponding to a sieve pore width of 0.074 mm (also classified as extra fine). The aspect ratio of wood particles may be between 1.1 and 5, whereas wood fibers may have higher ratios from 10 and up to >>100. In the case of cellulose nanofibers, which may be used in addition or alternatively, the material may be composed of nanosized cellulose fibrils with widths from 5-20 nanometers with a wide size range of lengths, preferably several micrometers, which makes them fibrous substances with a very high aspect ratio, preferably with 1/d » 100. Examples of cellulose nanofibers are microfibrillated cellulose and/or bacterial cellulose.

Preferably, Microfibrillated cellulose (MFC), bacterial cellulose (BC), woodfiber (WF), man-made cellulose (CEL), natural fiber (NF)and/or combinations thereof are used (see also abbreviation list for full names of materials) as the cellulosic material. Preferable combinations are MFC/NF and MFC/WF, each preferably in 1/100, 1/20, and 1/1 ratios.

The cellulosic material may comprise a powder and/or fibrous material derived from a renewable raw material, preferably a material containing cellulose. The material may additionally comprise hemicellulose, lignin, extractives, ash, or any combination thereof. The material preferably comprises wood fibers, cellulose fibers and/or other natural fibers.

The hydrophobic agent may comprise PE-PU, BTAK, LA, OA, CLW, CBW, RW, LO, SO, WO and/or combinations thereof (see abbreviation list for full names of materials).

The hydrophobic agent is preferentially a substance from the group of polyester-polyurethane elastomer (PE-PU), which may be dispersed or dissolved in a liquid (also termed liquid medium), e.g. water. A dispersion is a heterogeneous mixture of at least two substances, whereby the major liquid phase is preferably water (water-based dispersion) or may be another liquid. A liquid carrier is added to the dispersed/dissolved hydrophobic agent. The liquid carrier is preferably water or may be another liquid. The liquid carrier can be the same substance as the liquid medium of the initial dispersion comprising the hydrophobic agent or a different substance. The hydrophobic agent builds strength at the surface of the cellulosic material when the water evaporates and severely enhances the hydrophobicity of the cellulosic material (retention of water uptake of the material when being in contact with water in gaseous and liquidous form) and further reduces the amount of water uptake of semi-finished products (e.g. films, granulates, profiles) and finished products (cutlery, cups, straws, cocktail stirrer) made out of NFPC or WPC. As mentioned above the hydrophilicity of NFPC and WPC is highly related to the hydrophilicity of the cellulosic material.

Water-based, i.e. water-dispersed and/or water-dissolved, hydrophobic agents with water as the liquid medium are ecologically beneficial over solvent-based systems due to the use of water instead of organic solvents as liquid carrier and thus showing a lower carbon footprint. Furthermore, they exhibit less health issues and are thus seen to follow core aspects of the green chemistry. Hence, water-based hydrophobic agents are preferred, but organic solvents and/or others are also within the scope of the invention. Epotal P100 ECO is a preferred water-based hydrophobic agent (with a solid content of hydrophobic agent of approx. 40 %), which is compostable according to EN 13432.

The liquid that is at least partly extracted from the mixture or is not present in liquid form anymore by means of mechanically shearing and drying the mixture of step b) in an extruder according to step c) may thus comprise (i) water taken up by the cellulosic material due to its hydrophilicity, (ii) the liquid medium the hydrophobic agent is initially dissolved and/or dispersed in, and (iii) the liquid carrier of step b).

Preferably, a mass ratio of hydrophobic agent to cellulosic material is at least 1:200, preferably at least 1:100, more preferably at least 1:50, even more preferably at least 1:20, most preferably at least 1:15. It is noted that whenever an amount and/or a ratio of hydrophobic agent is given, the value refers to the non-dissolved/non-dispersed hydrophobic agent, i.e. to the hydrophobic agent without the liquid medium.

Preferably, the mass ratio of hydrophobic agent to cellulosic material is at most 2:1, preferably at most 1:1, more preferably at most 1:2, most preferably at most 1:5.

Most preferably, the mass ratio of hydrophobic agent to cellulosic material is in the range from 1:200 to 2:1, more preferably, 1:100 to 1:1, more preferably 1:50 to 1:2, more preferably 1:20 to 1:5 and most preferably from 1:15 to 1:5.

Preferably, a mass ratio of cellulosic material to binder is at least 1:100, more preferably at least 1:10, more preferably at least 1:3. Preferably, a mass ratio of cellulosic material to binder is at most 6:1, preferably at most 5:1, more preferably at most 4:1. Preferably, a mass ratio of cellulosic material to binder is from 1:100 to 6:1, more preferably from 1:10 to 5:1, most preferably from 1:3 to 4:1.

In the present invention, water is preferably used as the carrier of the hydrophobic agent. Alternatively or additionally, the liquid carrier may comprise an alcohol, preferably an alcohol with 1 to 3 carbon atoms, most preferably 2 carbon atoms (ethanol). The carrier may optionally comprise processing aids such as an initiator, a cross-linking agent (also called cross-linker), a surfactant (also called wetting agent), an emulsifier, a protective colloid that stabilize the emulsion or dispersion, a biocide, a pigment, a flame retardant and/or an antifoaming agent.

For example, to elevate the bond strength of the hydrophobic agent to the cellulosic material a water-emulsifiable, polyfunctional isocyanate cross-linker / hardener, e.g., based on isocyanurated hexamethylene diisocyanate such as Basonat® LR 9056 (100 % solid content, 17.5-18.5 % NCO content according to DIN EN ISO 11909) or Basonat LR 9080 (80% solid content, 11.5-12.5 % NCO content according to DIN EN ISO 11909) in concentrations of around 3 % based on wet Epotal P100 ECO can be used.

As an antifoaming agent e.g. a polyethersiloxane, e.g. Tego® Antifoam 4-94, preferably at a concentration of up to 0.1 % in relation to the hydrophobic agent, may be used in order to avoid extensive foaming.

As a surfactant a polysorbate surfactant with a fatty acid ester moiety and a polyoxyethylene chain may be used, e.g. Lumiten® I-SC, which is a solution of sodium sulphosuccinate/isotridecanol ethoxylate in water. Additionally or alternatively, a polysorbate with a fatty acid ester moiety and a long chain polyoxyethylene chain with oleic acid as the fatty acid rest may be used, e.g. Tween® 80. Additionally or alternatively, a polyoxyethylene containing an alkylphenyl group may be used, e.g. Triton X-100. Additionally or alternatively, a mixture of glycerophospholipids including phosphatidylcholine, phosphatidylethanolamine, phosphatidylinositol, phosphatidic acid may be used, e.g. Lecithin.

The initiator may be (TTT), i.e. 3,6,9-Triethyl-3,6,9-trimethyl-1,4,7-triperoxonane.

According to the invention, the hydrophobic agent may comprise a lipid and/or a polyurethane and/or an acrylate. Preferably, the hydrophobic agent comprises a lipid such as a fatty acid consisting of a 14- to 22-carbon chain where, in the case of unsaturated fatty acids, the carbon atoms are linked together by one to three double bonds. A linoleic acid and/or an oleic acid is preferred, wherein a linoleic acid is preferred over an oleic acid. Alternatively, the hydrophobic agent may comprise lipids or a mixture of lipids which contain no fatty acids or which contain, in addition to fatty acids, other substances such as waxes, which are mixtures of substances of hydrocarbons, esters of higher molecular weight, free acids, and resins, preferably rice wax and more preferably Carnauba wax, Candelilla wax, but a linoleic acid and/or oleic acid is even more preferred. Alternatively, the hydrophobic agent comprises other lipids such as triglycerides which are known from plant derived native oils, preferably walnut oil, more preferably sunflower oil, more preferably linseed oil.

According to the invention, a water-dispersible polyurethane such as a water dispersible polyester-polyurethane elastomer such as described in (EP 2 556 953 A1, page 2, line 56, [0012], and EP 2 550 090 B1, production examples 1-13, in particular production example 6) may be used as the hydrophobic agent and a water dispersible acrylate such as a water dispersible acrylate containing polyester segements such as described in WO 2000/068335 A1, Table 1, Example E7 and in WO 2012/140174 A1, Table 5, Example D19 may be used as the acrylate. Furthermore, a combination of one or more above mentioned lipids and one or more substances from the class of polyurethanes and acrylates are preferred.

The mechanical shearing and the drying in step c) may take place simultaneously. Alternatively or additionally, they may take place one after the other, i.e. shearing followed by drying or vice versa.

Step c) may comprise a sequence of one or more mechanical shearing steps and one or more drying steps. The shearing steps may differ in their shearing rate. For example, their shearing rates may be each from 1 $s^{-1}$ to 1000 $s^{-1}$, preferably from 1 $s^{-1}$ to 100 $s^{-1}$. This may be achieved by adjusting the rpm of the screw drive motor in a range of 20 - 300 rpm, the feed rate in a range of 10 - 100 kg/h, the mixture temperature in a range of 20 - 200 °C, and/or the ratio of hydrophobizing agent to cellulosic material.

The drying steps may differ in their drying rate. The drying rate is given by $R = -((mP/AP) \cdot (dM/dt))$ where R is the drying rate (in $kg^2/m^2s$), mP is the mass of the product, AP is the drying surface area of the product and dM/dt is the moisture loss rate in kg/s. The drying rates may be 0.001 $kg^2/m^2s$ to 0.01 $kg^2/m^2s$ or $10^{-4}$ $kg^2/m^2s$ to $10^{-3}$ $kg^2/m^2s$. This may be achieved by adjusting the screw speed (rounds per minute) of screw drive motor, the feed rate, the mixture temperature, the ratio of hydrophobizing agent to cellulosic material, the accessible surface area of the mixture, and/or the pressure difference created by the vacuum pump, wherein a volume flow rate capacity of the vacuum pump is preferably 0.005 to 0.04 $m^3/s$, more preferably 0.2 $m^3/s$. Some of the several drying steps and some of the several shearing steps may take place simultaneously. The screw speed may be adjusted by e.g. one or more AC speed control motors or one or more brushless DC motors.

In general, the chronological order of steps a)-d) may be chosen as appropriate. For example steps a) and b) may be carried out independently from one another and may therefore be carried out simultaneously and/or one after the other. Step c) follows after steps a) and b). Step d) may be carried out after and/or simultaneously with step c). If the method is implemented as a continuous process a person skilled in the art will easily recognize that steps a)-d) may then be carried out simultaneously, while the above order applies for material portions that will result in the same final material portion.

Step a) may comprise one or a combination of: heating the binder to a temperature of 110°C to 400°C, preferably 120°C to 240°C, more preferably 130°C to 220°C; homogenizing the binder; adding an additive; drying the binder.

The blend of the dried mixture and the plasticized binder may be homogenized, preferably at a temperature of 120°C to 240°C, more preferably at a temperature of 160°C to 230°C. Homogenization may be achieved by the use of alternating kneading, conveying and/or mixing elements.

The additive to the binder (also called binder-additive) may comprise a functional substance such as an antioxidant, a plasticizer, a pigment, a dye, an antifoaming agent, a chemical modifier, a cross-linker, a toughness modifier, a release agent, a compatibilizer, a stabilizer, a flame retardant, an adhesion promoter, and/or an odor additive. Optionally, the binder-additive may comprise a non-functional filler.

Drying the binder is preferably achieved by atmospheric venting (1 bar) followed by suction using underpressure, e.g. of less than 1 bar.

The mean particle length of the cellulosic material may be within the range from 100 nm to 40 mm, preferably from 10 μm to 20 mm. Additionally or alternatively, the mean particle width of the cellulosic material is within the range from 5 nm to 10 mm, preferably from 80 nm to 2 mm.

The binder may be provided as a granulate material and/or a powder, and the binder may be metered into a main line of an extrusion apparatus, preferably gravimetrically, wherein the main line preferably comprises a hotmelt extruder with a feeding section, a plasticization section, an inlet section for blending the dried mixture with the plasticized binder and a dispersion section. The hotmelt extruder preferably further comprises one or more deliquification sections arranged before the inlet section and/or a compression section arranged behind the dispersion section.

The main line of the extrusion apparatus is preferably a homogenization extruder.

The extruder for shearing and drying the mixture in step c) may comprise a deliquification extruder connected to the main line of the extrusion apparatus, preferably to the inlet section of the hotmelt extruder. The deliquification extruder preferably comprises a feeding section and a section for shearing and deliquification.

The deliquification extruder may comprise a multi-screw extruder, preferably a ring extruder or a multi-rotation system. The deliquification extruder may comprise a ring extruder with at least one stuffer, preferably at least two stuffers, wherein each stuffer preferably comprises a vacuum pump. Each vacuum pump preferably creates a pressure difference of less than 60 mbar, more preferably less than 20 mbar. The deliquification extruder preferably comprises a multi-rotation system with at least one vent, preferably at least two vents, three vents or more. A vent is an opening in the barrel which contains the screws. To prevent vent leakage the barrel vent opening is fitted with a so called diverter, which deflects the solid material away from the opening. An extruder of the main line, preferably the homogenizing extruder, and an extruder of the side feeding line, preferably the deliquification extruder, may preferably run at a velocity of 10 to 300 rpm.

The section for shearing and deliquification of the deliquification extruder may comprise one or more conveying sections and one or more shearing sections. The conveying section(s) may decrease the degree of fill by increasing the channel volume, i.e. the free volume in the processing unit. The lower fill in the screw channel produces thinner material layers through which the volatiles must diffuse and therefore the deliquification is enhanced. Conveying elements with a lower helix angle (the helix angle is the angle of a screw flight relative to a plane perpendicular to the screw plane) enhances the pressure of the material being conveyed. The shearing section(s) may impose repeated fusion and intimate mixing by the use of trilobe shearing elements.

Preferably, the dried mixture has a gravimetric water content of at most 1%, preferably at most 0.5%, more preferably at most 0.1%, most preferably at most 0.05 % (500 ppm) as determined according to NREL/TP-510-42621 for a gravimetric water content of > 0.1% and DIN 51777-1 for a gravimetric water content of ≤ 0.1 %. The gravimetric water content [1] is expressed as follows: Gravimetric water content = m(W) / m(wet) where m(W) is the mass of water and m(wet) is the mass of water-containing substance prior to drying.

Preferably, step b) comprises mixing the cellulosic material with the hydrophobic agent dissolved and/or dispersed in the liquid carrier, preferably in an extruder. For example, this may be achieved by one or more conveying elements with successively decreasing pitch for pressure build-up and one or more subsequent mixing and kneading elements.

Preferably, the cellulosic material, before mixing, has a gravimetric water content which is higher than the gravimetric water content of the dried mixture. For example, the cellulosic material, before mixing, may have a gravimetric water content of at least 1%, preferably at least 2%, more preferably at least 5%, most preferably at least 10%.

Preferably, the temperature of the mixture provided in step b) is maintained above the glass transition point (acrylates and urethanes) or the phase transition point (lipids) of the hydrophobic agent. This results in an enhanced wetting performance and adhesion of hydrophobic agent on cellulosic material during drying.

Preferably, the hydrophobic agent after step c) is bonded covalently and/or via secondary valencies to the cellulosic material, wherein the extractable hydrophobic agent after step c) is at most 10%, more preferably at most 5%, most preferably at most 1%. The extractable hydrophobic agent is determined in a two-step (water followed by ethanol) extraction procedure in accordance with the Laboratory Analytical Procedure (NREL/TP-510-42619) for the Determination of Extractives in Biomass, and by correction of the naturally occurring extractives in the cellulosic material, which are determined according to said procedure. If any processing aids (additives) are part of the dried mixture several wet chemical processes like preparative chromatography can be employed by using the extractives as obtained from NREL/TP-510-42619 to only account for the amount of extractable hydrophobic agent.

For the blending of cellulosic material such as wood particles, wood fiber and/ or other natural fiber with one or more polymers, several continuous processing routes have been suggested, in particular processing on co-rotating twin screw extruders. In most of these processes, a plasticized binder is formed in the molten state in the first extruder zones, containing a thermoplastic polymer, plasticizers and additives (e.g. UV-stabilizers, antioxidants, stabilizers against hydrolysis, hydrophobic agents).

A facile but laborious way to remove water from the cellulosic material is the pre-blending with the polymer in high-intensity mixers prior to the compounding step under continuous drying by venting and elevated temperatures.

For polyesters such as Polylactic acid (PLA), the most preferred moisture content during compounding is restricted to a maximum of 1 % and preferably to a maximum of < 0.025 % (250 ppm) to reduce the hydrolysis to at most 10 % during compounding. Therefore it is advantageous to limit the quantity of water being in contact with polyester material.

Furthermore, polyesters such as PLA and PET are shear-sensitive, which means that the thermal and mechanical energy imparted on the polymer during compounding may lead likewise to a reduction of polymer chain length. In the case of homopolymers this is equal to a reduction in the number average molecular weight $M_n$ of the polymer (Pohl 2006). The extent of polymer chain degradation in the course of processing can be followed by the determination of different average values, such as the number average molar mass ($M_n$), see equation (1), and the mass average molecular weight ($M_w$), see equation (2), which can be measured by relative methods such as gel permeation chromatography (GPC) or absolute methods such as light scattering. Alternatively other methods like ebullioscopy or cryoscopy can be applied.

$$M_n = \frac{\sum M_i \cdot N_i}{\sum N_i} \qquad (1)$$

$$M_w = \frac{\sum {M_i}^2 \cdot N_i}{\sum M_i \cdot N_i} \qquad (2)$$

where $N_i$ denotes the number of moles of each polymer species and $M_i$ the molar mass of that species.

With reference to the Figures, the inventive method for manufacturing a composite material is further explained.

Fig. 1 shows an extrusion device suitable for use with the invention;

Fig. 2 shows a schematic representation of the screw design of a deliquification extruder;

Fig. 3 shows an example of a hydrophobic agent consisting of a water-dispersible, hydrolysable polyester-polyurethane.

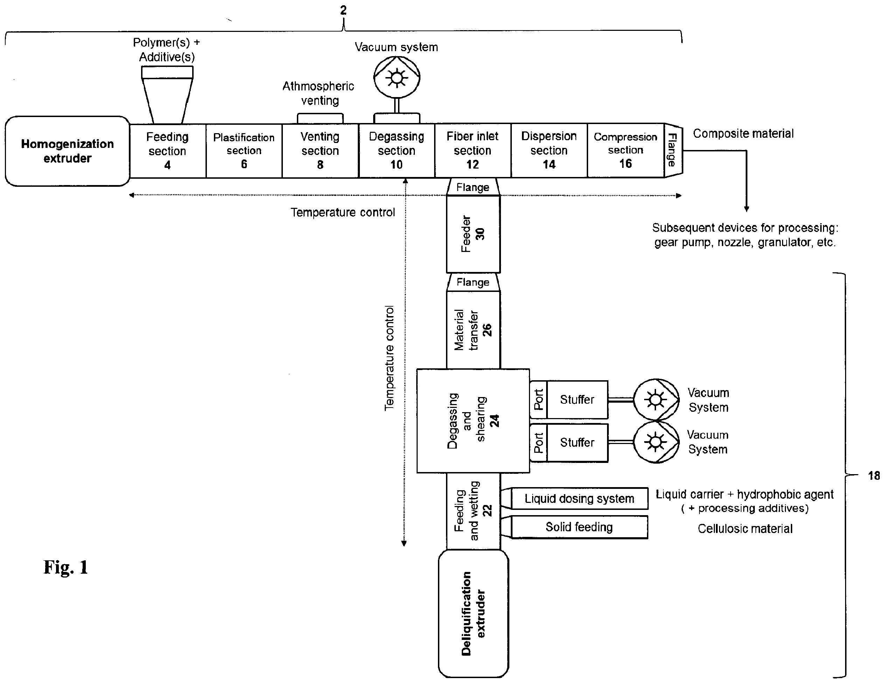

An extrusion device suitable for performing the method according to the invention (see Fig. 1) may comprise a homogenization extruder 2, which may comprise a main feeding section 4, a plasticization section 6 for plasticization and compression, a venting section 8, a degassing section 10, a fiber inlet section 12, a dispersion section 14 for dispersing the dried mixture with the plasticized binder, and a compression section 16, preferably in this order. The compression section 16, which is also called discharge section may be attachable, e.g. via a flange, to peripheral devices. For example, discharge section 16 may be attached to a strand die, an air quench conveyor and/or a pelletizer enabled to produce material granulates for injection molding. Temperature may be independently controllable for each of these sections, e.g. in a range from 20 to 300 °C. The feeding section 4 may be maintained at e.g. 30-50°C to facilitate proper feeding of binder in its non-plasticized state. A suitable temperature profile along the homogenization extruder 2 may be increasing from the feeding section 4 towards the discharge section 16 with the highest temperature being e.g. 30-40°C above the melting point of the polymeric binder possessing the highest melting point and starting with a temperature of e.g. 10-20°C above the melting point of the polymeric binder possessing the highest melting point. (e.g. for PLA: section 4: 30°C, section 6: 190°C, section 8: 185°C , section 10: 175°C, section 12: 175°C, section 14: 170°C, section 16: 165°C)

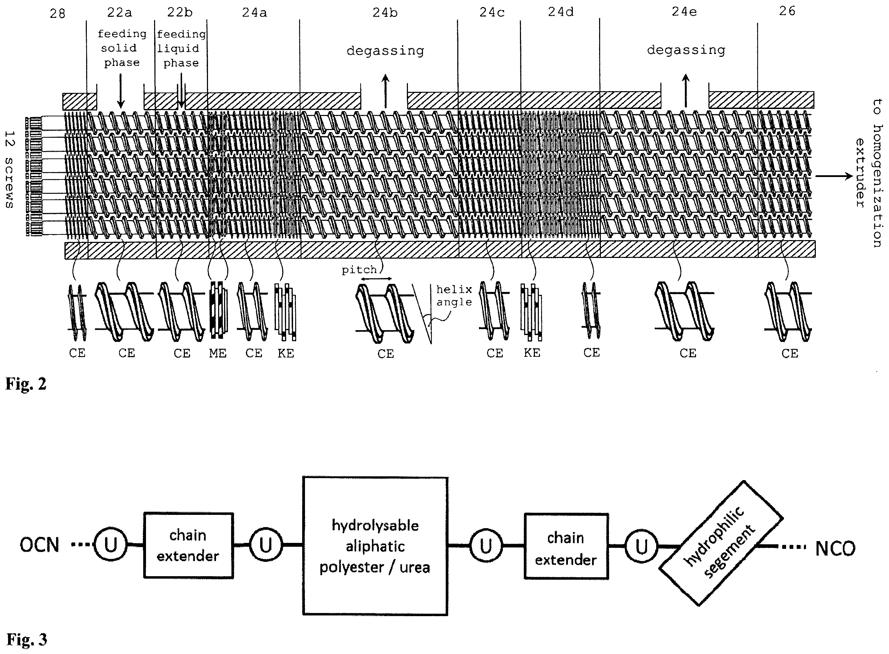

The extrusion device may further comprise a deliquification extruder 18 (see Figs. 1 and 2), which may comprise a feeding and wetting section 22 including a feed throat for solid feeding and a liquid dosing system, a degassing and shearing section 24, and a material transfer section 26. Temperature may be independently controllable for each of these sections, e.g. in a range from 20 to 300 °C. Thus, the feeding sections 22a, 22b may be maintained at e.g. 30-95°C to facilitate proper feeding of cellulosic material and water-based dispersion below the boiling point of the liquid(s) (e.g. for water below 100°C). The screw speed of each of the consecutive sections 22-26 can be varied between 10 rpm and 300 rpm independently, depending on the process. For example, a Extricom RE 3 XPV 40 D, co-rotating, multi-shaft extruder (screw diameter: 30 mm, distance between wall and screw flank: 1.3 mm, length/diameter ratio: 40, ratio outer screw diameter to inner screw diameter: 1.74/1) may be used as the deliquification extruder 18. To prevent material transfer in liquid, solid or gaseous state towards the gear box, screw elements showing a small helix angle were implemented prior to the feeding section 22, in section 28. In order to facilitate a good deliquification and shearing performance, a pressure gradient is controlled by screw geometry. Therefore, screws are segmented and assembled on splined shafts. An exemplary screw configuration in accordance with the invention is given in Fig. 2 and Tab. 1. As indicated in Fig. 2, all the sections except for the shearing zone 24d may comprise conveying elements CE, whereas the shearing zone 24d may comprise kneading elements KE and mixing element ME. The helix angle of the conveying elements may be different for different sections. For example, in the feeding section 22a the pitch is preferably designed to be equal to the screw diameter (so called square pich) and the resulting helix angle is preferably aqual to 17.6568°. In sections 22b, 24a, 24c, 24d the relative helix factor is preferably < 1 (where the relative helix factor is calculated by helix angle divided by helix angle of the square pitch (17.6568°)). In sections 24b, 24e and 26 the relative helix factors are preferably > 1. For example the following helix factors may be employed: section 22a: 1.00; section 22b: 0.79; section 24a: 0.58-0.68; section 24b: 1.42; section 24c: 0.58-0.68; section 24d: 0.58; section 24e:1.21; and section 26: 1.42.

The extrusion device preferably includes a feeder 30, preferably a side-feeder 30, which feeds the homogenization extruder with the dried mixture obtained after step c.

**Table 1** Description of the screw design including functions and temperature profile (exemplary)

| Section $N_0$ | Description | Function | Characteristics | Barrel Temperature (for Polyester Polyurethane) |
|---|---|---|---|---|
| 28 | Backflow prevention | To prevent material transfer in liquid, solid or gaseous state towards the motor drive | conveying elements showing a small helix angle | 40 °C |
| 22a | Feeding (solids) | Feeding of the cellulosic material and material distribution in process volume | freely cut screw profile with a high free cross-sectional area to increase feed capacity → Flighted conveying elements | 40 °C |
| 22b | Feeding (dispersion) | Feeding and establishing a dispersion containing the cellulosic material, hydrophobic agent, cross-linker and processing aids | Piston pump transfers dispersion to the process chamber. Section showing a screw profile with lower helix angle for thorough wetting of the material. Optionally, mass transfer elements which engage in a non-sealing manner to allow further improved material transfer to the full process volume | 80 °C |
| 24a | Compression | Pressure build up | Alternating sequence of conveying, mixing and kneading elements with successively decreasing helix angle for pressure build-up → Mixing, compressing and shearing | 150 °C |

(continued)

| Section $N_0$ | Description | Function | Characteristics | Barrel Temperature (for Polyester Polyurethane) |
|---|---|---|---|---|
| 24b | Deliquification 1 | Strong change in volume and deliquification by rapid decompression and heating of the volatile component under an atmospheric vent | Conveying (flighted) elements with higher helix angle which translates into a higher free screw volume, which facilitates that volatile materials can escape. Vent Stuffer attached to the barrel → material is transported into the process room; gases and vapors are routed through the stuffer screw channels | 150 °C |
| 24c | Compression | Pressure build up | Conveying elements with successively decreasing helix angle for pressure build-up | 150 °C |
| 24d | Shearing | pressure build-up and mechanical shearing | Kneading elements (e.g. 3-lobal) and intermeshing elements to reduce free volume (compression) and enhance mechanical force (shearing) | 150 °C |
| 24e | Deliquification 2 | Strong change in volume and deliquification by rapid decompression and superheating of the volatile component under a vacuum vent | See section 24b | 150 °C |
| 26 | Material transfer | Pressure build-up | Conveying elements with smaler helix angle for pressure build-up; | 80 °C |

The binder may be prepared by plasticizing the binder at elevated temperatures in a co-rotating twin-screw extruder as the homogenization extruder, e.g. a Berstorff ZE 42 (screw diameter 42, length-to-diameter ratio L/D 44, Germany). The binder may be plasticized at an appropriate screw speed, preferably at a screw speed from 80 rpm to 300 rpm, most preferably 160 rpm, and an appropriate feeding rate, preferably 30 kg/h to 60 kg/h, most preferably 46.66 kg/h. The temperature of the plasticized binder at the inlet of the dried mixture, i.e. in the fiber inlet section 12, as obtained after degassing the plasticized binder in section 10 is preferably 120 °C to 210 °C, most preferably 180 °C.

For a fast heating of the binder and in order to reduce matrix viscosity an increasing temperature profile from 30 °C to 200 °C may be chosen. The feed throat section may be set to a temperature well below the melting point of the polymer to prevent the polymer to melt prematurely. To prevent overheating of the polymeric binder as soon as the binder comes into contact with the dried mixture, the barrel temperatures in the later sections may be successively cooler than in the plasticization section 6.

A dispersion comprising a hydrophobic agent and optionally one or more processing aids (i.e. additives) is prepared.

The hydrophobic agent comprises a polymer, preferably a polyester polyurethane (PE-PU). A polyester polyurethane is a polymer in which the repeating units contain urethane and ester moieties. Aqueous polyurethane dispersions (PUD) are preferably produced by a multi-step copolymerization reaction scheme containing polyisocyanates and different functional monomers such as polyols, multifunctional polyesters and chain extenders to give high-molecular-weight polymer dispersions exhibiting urethane bonds. Furthermore, since conventional polyurethanes are insoluble in water, ionic and/or nonionic hydrophilic segments are preferably incorporated in the polymeric backbone structure. For example, in US 3905929 A a polyurethanes having a nonionic polyoxyethylene segment -(-O-$CH_2$-$CH_2$-)-is described.

An example of such a hydrophobic agent containing urethane linkages is shown in Fig. 3, where "U" denotes a urethane linkage and "OCN" and "NCO" each denotes a free isocyanate group.

The resulting mixture preferentially comprises unbound NCO-groups for further reaction with reactive hydrogen comprising groups such as alcohol (OH-) groups.

Furthermore, other moieties may be included such as ether and aromatic moieties, while hydrolysable ester linkages (such as in polycaprolactonediols) or hydrolysable urea linkages must be present for degradation by microbes producing free amine and free carboxylic acid groups, respectively.

Free carboxylic acid in the polymer leads to autocatalytic hydrolysis, which accelerates the process of biodegradation. Dependent on the segment length of the hydrolysable polyester the degradation can be tuned due to accessibility by microorganisms/enzymes.

A chain extender can contribute to the flexibility of the hydrophobic agent which provides better coating performance. Multifunctional segments may be introduced to provide highly reactive sites (functional groups) for a better cross-linking performance. Soft segments may be introduced for yielding an amorphous rubbery phase.

The pot life, which is the period for which the hydrophobic agent and the cross-linker remain usable when mixed is highly dependent on the pH. As mentioned before, the coagulation is favored at pH higher than 7.5. To reduce pot life, i.e. in the mentioned case the cross-linking, pH has to be elevated. This is accomplished in the process by continuously removing water and thus gradually elevating the pH.

Biodegradation by microorganisms is highly dependent on properties such as molecular orientation, crystallinity, cross-linking and chemical groups present in the polymeric backbone which determine accessibility by the organisms.

Another possible hydrophobic agent is a substance based on a copolymer containing acrylic groups such as described in US 6,716,911 B2. In an example the urethane linkages can be (fully or partly) replaced by acrylate linkages (e.g. ethyl acrylate, butyl acrylate, ethylhexyl acrylate and mixtures thereof) such as in BioTAK® S100 acrylic waterborne adhesive to give an acrylic hydrophobic agent. Here, processing aids such as hydrophobic tackifiers like rosin ester dispersions (Superesters E-650, E-720 and E-730-55, Arakawa Chemical, Japan) can be used in order to provide sufficient initial bond strength. Furthermore water-soluble plasticizers can be added and can help to provide enough elasticity.

For thorough dispersion of the components and to obtain the maximum effect, the addition is preferably done under constant stirring using a dissolver such as DISPERMAT® CN80 (VMA-Getzmann GmbH, Germany) or any other equipment having a stirrer ready for such task.

To elevate the performance, the dispersion is optionally stirred for 12 h under constant stirring prior to use and the pH is kept below 7.5 to prevent extensive coagulation.

The cellulosic material is fed into the feed throat of the deliquification extruder. This may be done gravimetrically. The feeding rate may be set appropriately, e.g. to 10 kg/h to 50 kg/h, preferably to 20 kg/h based on pre-dried cellulosic material. The dispersion comprising the hydrophobic agent and optionally the processing aid(s), i.e. additives, is metered into the deliquification extruder by a liquid feeding system at an appropriate feeding rate, e.g. 10 kg/h to 50 kg/h , preferably 22kg/h, to give a desired proportion of cellulosic material to hydrophobic agent, e.g 9:1 (w/w) for final composition.

The cellulosic material may be gravimetrically metered to the feeding throat of the deliquification extruder, e.g. by loss-in-weight metering feeders. The hydrophobic agent, the optional cross-linker and the optional processing aids, which are dispersed in water, may be, preferably smimultaneously, fed to the feeding throat of the deliquification extruder by a liquid dosing system (e.g. a piston pump).

The deliquification extruder is used to process the mixture, containing a suspension of a plant material and a hydrophobic agent. Here a liquid (predominately water) is used as a carrier to lower the viscosity of the hydrophobic agent and for a better film forming ability on the surface of the plant material. Furthermore, due to the sometimes slow kinetics of chemical and physical bond formation, it is known to use compression, heat and shearing which are readily realized in extrusion operations by rotating screws, to enhance the relative amount of non-removable hydrophobic agents attached to and incorporated in the plant material. The deliquification efficiency is influenced by several factors such as residence time under the vent, temperature, surface area of the material that should be deliquefied, surface renewal, and vacuum level. Parameters to be varied include screw speed, feed rate, temperature and temperature profile, and vacuum level. Readouts are motor electric power consumption and throughput. These readouts can be used to quantify the shearing calculated according to Philip J. Brunner, Joshua T. Clark, John M. Torkelson, Katsuyuki Wakabayashi (2012) Processing-Structure-Property Relationships in Solid-State Shear Pulverization: Parametric Study of Specific Energy. Polymer Engineering and Science, 52 (7), 1555-1564, referred to as Brunner et al. (2012). The evaluation of the extent of shear and compression applied to the material showed the specific energy input $E_{SME}$ to be in the range of 67 kJ/kg - 55,000 kJ/kg, dependending on the following parameters: torque: 0.1 - 0.55 kJ, rotation speed of the screws: 20 - 300 $s^{-1}$, overall material throughput: 0.003 - 0.03 kg $s^{-1}$, residence time: 20 s - 180 s.

The concept of specific energy input according to Brunner et al. (2012) can be used across different models and screw designs to describe approximately the degree to which shear stresses and compressive forces do work on the material during processing in extruder setups. Dependent on screw design, screw speed, barrel temperature, throughput (feed rate), feed shape/size (unique to solid state shear), feed content and considerably on the nature of the material(s) involved. Specific mechanical energy input ($E_{SME}$) values are based on power contributions in the motor drive with and without material simply extracted from the instrumentation display. Thus, the $E_{SME}$ value is the maximum energy that could be translated to the material. In practice, however, the actual amount of energy consumed by the materials alone would be less than the actual $E_{SME}$ values reported due to various practical energy losses, which is friction of samples against barrel walls (heat loss) and the power to mix and move solid material forward within the barrels.

The extent of shear and compression applied to the material can be varied by the residence time (t) and the specific mechanical energy input ($E_{SME}$). $E_{SME}$ quantifies the mechanical energy input to process a unit mass of the mixture and can be calculated using equation 3.

$$E_{SME} = \frac{\tau \cdot N}{\dot{m}} \qquad (3)$$

where $\tau$ is the torque (kJ), N is the rotation speed of the screws ($s^{-1}$), and $\dot{m}$ is the overall material throughput (kg $s^{-1}$). The residence time can be determined by introducing a tracer (e.g. a radio tracer like $^{64}Cu$) at the extruder inlet and measuring the tracer concentration at the die.

Any gaseous phase including the vaporized carrier (e.g. water) can be subjected to further devolatilization in one or more vent zones of the deliquification extruder. At least one vent zone is located in the region downstream in relation to the direction of conveying of the mixture, preferentially within zone 24b and/or zone 24e. The devolatilization is done at atmospheric pressure or with the aid of suction. In the vent zones one or more so called vent ports are fitted to the barrel of the deliquification extruder. Vent ports are openings in the extruder barrel which allow volatiles to be removed from the process chamber. A vacuum pump (e.g. water ring pumps with an absolute pressure of 30 mbar) can be attached to the vent port to assist in the removal of volatiles. The venting ports can be arranged at variable positions in relation to the direction of conveying the mixture. The best results were obtained with zone 24b being located at 10 to 20 L/D and zone 24e being located at 21 to 30 L/D, preferentially 14 L/D and 27 L/D for zone 24b and zone 24e, respectively. Cooled condensers immediately downstream of the gas output (e.g. directly attached by a flange) may be used for gaseous-liquid-phase change to prevent extensive water vapour emissions. To prevent an extensive exiting of solid cellulosic material and hydrophobic agent through the vent port, so called vent port stuffer may be attached to vent ports with a flange and the suction device (e.g. a vacuum pump) may be connected at the motor side of the screws. The deliquification extruder may comprise a ring extruder with at least one stuffer, preferably at least two, wherein each stuffer preferably comprises a vacuum pump, each vacuum pump creating a pressure difference of less than 60 mbar, preferably less than 20 mbar.

After mechanically shearing and drying the mixture, the mixture may be optionally fed into a throat section of the side feeder 30, preferably via a pressure resistant sealed transfer section. Care may be taken that the side-feeder 30 is constantly underfed to avoid piling up of material. For example, a twin-screw side feeder (ZSFE 40) with twin auger screws may be used for constantly metering the material to the homogenization extruder 2, e.g. at a screw speed of 20 rpm to 300 rpm, preferably 120 rpm. The side-feeder 30 is attached to the homogenization extruder 2 via a flange to give under-pressure conditions (e.g. 600 mbar, preferably < 1 atm) in the transfer zone. This prevents that the homogenization extruder 2 is fed with a too high proportion of entrained gas fraction.

**Example**

Example 1 was carried out using a combination of a homogenization extruder and a deliquification extruder as shown in Figs. 1 and 2 and with the extrusion conditions shown in Tables 1 and 2. The deliquification extruder was an Extricom RE 3 XPV 40 D, co-rotating, multi-shaft extruder (screw diameter: 30 mm, distance between wall and screw: 1.3 mm length/diameter ratio: 40, ratio outer screw diameter to inner screw diameter: 1.74/1, helix angles: section 22a: 1.00; section 22b: 0.79; section 24a: 0.58; section 24b: 1.42; section 24c: 0.58; section 24e:1.21; and section 26: 1.42.) and the homogenization extruder was a co-rotating twin-screw extruder of the type Berstorff ZE 42 (screw diameter 42, length-to-diameter ratio L/D 44, Germany). To prevent material transfer in liquid, solid or gaseous state towards the gear box of the deliquification extruder, screw elements showing a small pitch were implemented in section 28, prior to the feeding sections 22a and 22b. In order to facilitate a good deliquification and shearing performance, a pressure gradient was controlled by screw geometry. Therefore, screws were segmented and assembled on splined shafts.

**Step a: Plasticizing a binder in an extruder**

In example 1, polylactic acid (PLA) was used as the binder. As an additive, Tego® Antifoam 4-94 at a concentration of 0.01 % in relation to the hydrophobic agent was used in order to avoid extensive foaming. (For the hydrophobic agent see step b below.)

The PLA and the additive were fed to the feeding section of the homogenization extruder. In the homogenization extruder the binder was prepared by plasticizing the PLA at an elevated temperature well above the melting range of PLA, which is 150 °C to 160 °C, preferably at a temperature of 190 °C, at a screw speed of 160 rpm and at a feeding rate of 46.66 kg/h. The temperature of the plasticized binder at the inlet of the dried mixture (Section No. 12 in Table 2) as obtained after the first degassing section 8 was 185 °C.

**Table 2** Extrusion conditions in the homogenization extruder

| Section No | Description | Task | screw geometry (characteristic) | Barrel Temperature for PLA |
|---|---|---|---|---|
| 4 | Feeding | Feeding of polymers and additives and conveying | freely cut screw profile with a high free cross-sectional area to increase feed capacity | 30 °C |
| 6 | Plasticization | Plasticization | with successively lower pitch, kneading screw elements | 190 °C |
| 8 | Venting | change in volume and degassing by change in pressure to atmospheric pressure (optionally additionally vacuum degassing) and additional external heat | Changing the shape of the screw (higher pitch or helix angle) | 185 °C |
| 10 | Degassing | Vacuum degassing | conveying elements with higher pitch which translates into a higher free screw volume, which facilitates that volatile materials can escape | 175 °C |
| 12 | Fiber-inlet | Treated fiber inlet | freely cut screw profile with a high free cross-sectional area to increase feed capacity, | 175 °C |
| 14 | Dispersion | Fiber dispersion | Kneading elements and multi-process elements | 170 °C |
| 16 | Compression | Compression and Discharge | Tightly intermeshing conveying elements | 165°C |
| 30 | Side-Feeder | Fiber feeding | Twin-screw side feeder (ZSFE 40) with twin auger screws | 30 °C |

For a fast heating of the binder and in order to reduce matrix viscosity a decreasing temperature profile was chosen. The feed throat section was set to 30 °C to prevent the polymer to melt prematurely. To prevent overheating of the polymeric binder as soon as the binder comes in contact with the dried mixture, the barrel temperatures in the later sections are successively cooler than in the plasticization section.

**Step b (1): Preparation of a dispersion containing a hydrophobic agent dispersed in a liquid carrier**

A dispersion containing the hydrophobic agent and processing aids was prepared by first diluting the hydrophobic agent Epotal® P100 ECO by adding water, resulting in the water-based hydrophobic agent Epotal® P100 ECO with 40 % solids content, i.e. 40 % hydrophobic agent content (also denoted "Epotal® P100 ECO(40%)").

To 18 kg of water, 5 kg of a hydrophobic agent dispersed in water (Epotal® P100 ECO (40 %)) and 0.25 kg of an emulsifiable cross-linker (Basonat® LR 9056) were added. Furthermore, 0.025 kg of the surfactant Lumiten® I-SC and 0.005 kg of the antifoaming agent Tego® Antifoam 4-94 were added.

For thorough dispersion of the components and to obtain the maximum effect, the addition was done under constant stirring using a DISPERMAT® CN80 (VMA-Getzmann GmbH, Germany) dissolver. To elevate the performance, the dispersion was stirred for 12 h under constant stirring prior to use and the pH was kept below 7.5 to prevent extensive coagulation.

The composition of the dispersion obtained in step bl is summarized in table 3.

**Table 3** The final composition of the dispersion obtained in step bl

| Substance | Characteristics | Relative proportion (%) | Weight (kg) |
|---|---|---|---|
| Water | Liquid carrier & liquid medium | 90.642 | 21 |
| Epotal® P100 ECO | Hydrophobic agent | 8.633 | 2[1] |
| Basonat® LR 9056 | Cross-linking agent | 0.647 | 0.15 |
| Lumiten® I-SC | Surfactant (processing aid) | 0.065 | 0.015 |
| Tego® Antifoam 4-94 | Antifoaming agent (processing aid) | 0.013 | 0.003 |

[1] Based on solids content of Epotal® P100 ECO

**Step b (2): Providing a mixture of a cellulosic material and a hydrophobic agent dissolved and/or dispersed in a liquid carrier**

WoodForce Fast natural (Sonae Arauco) was used as a cellulosic material.

The cellulosic material (WoodForce Fast natural, Sonae Arauco) was gravimetrically metered into a feed throat of the deliquification extruder located at 2 D (measured from the beginning of section 22a (drive side) in the direction of material transport, i.e. towards section 26 (material outlet) where D denotes 'diameter' and would mean that 2D is the distance equal to 2 times the screw diameter) by a loss-in-weight metering feeder at a feeding rate of 20 kg/h (based on pre-dried cellulosic material). Simultaneously, the dispersion as prepared in step b1 was metered into the deliquification extruder by a liquid dosing system (here: Etatron AP Series Dosing Piston Pump) located at 5 D ((measured from the beginning of section 22a (drive side) in the direction of material transport, i.e. towards section 26 (material outlet) where D denotes 'diameter' and would mean that 2D is the distance equal to 2 times the screw diameter) at a feeding rate of 22kg/h to give a proportion of cellulosic material to hydrophobic agent of 9:1 (w/w).

The final dispersion containing the dispersion obtained in step b1 and the cellulosic material prior to deliquifaction had weight proportions of liquid (water), cellulosic material, hydrophobic agent, cross-linking agent, surfactant, and antifoaming agent of 50.79 %, 43.97 %, 4.84 %, 0.36 %, 0.04 %, and 0.01 %, respectively.

**Step c: Mechanically shearing and drying the mixture**

In the step of mechanically shearing and drying of the mixture performed in section 24a-24d of the deliquification extruder a screw speed of 120 rpm was used.

The deliquification efficiency is influenced by several factors such as residence time, temperature, surface area of the material that should be deliquefied, surface renewal rate, and level of suction of the vacuum pump(s). Parameters to be varied include screw speed, feed rate, temperature and temperature profile, and vacuum control by means of frequency drive (variable speed drive) regulation of the pump. Readouts are extruder motor torque, overall material throughput, mean material temperature. Readouts can be used to quantify the shearing calculated according to Brunner et al. (2012). The evaluation of the extent of shear and compression applied to the material showed the specific energy input ESME to be in the range of 67 kJ/kg - 55,000 kJ/kg, depending on the following parameters: torque: 0.1 - 0.55 kJ, rotation speed of the screws: 20 - 300 s-1, overall material throughput: 0.003 - 0.03 kg s-1, residence time: 20 s - 180 s.

Any gaseous phase including the vaporized carrier (e.g. water) can be subjected to further devolatilization in one or more vent zones of the deliquification extruder. At least one vent zone is preferably located in the region downstream in relation to the direction of conveying of the mixture, preferentially within zone 24b and/or zone 24e. The devolatilization may be done at atmospheric pressure or with the aid of suction. In the vent zones one or more so called vent ports may be fitted to the barrel of the deliquification extruder. Vent ports are openings in the extruder barrel which allow volatiles to be removed from the process chamber. A vacuum pump (e.g. water ring pumps with an absolute pressure of 30 mbar) can be attached to the vent port to assist in the removal of volatiles. The venting ports can be arranged at variable positions in relation to the direction of conveying the mixture. The best results were obtained with zone 24b being located at 10 to 20 L/D and zone 24e being located at 21 to 30 L/D, preferentially 14 L/D and 27 L/D for zone 24b and zone 24e, respectively. Cooled condensers immediately downstream of the gas output (e.g. directly attached by a flange) may be used for gaseous-liquid-phase change to prevent extensive water vapour emissions. To prevent an extensive exiting of solid cellulosic material and hydrophobizing agent through the vent port, one or more so called vent port stuffers may be attached to vent ports with a flange and the suction device (e.g. a vacuum pump) may be connected at the motor side of the screws. The deliquification extruder may comprise a ring extruder with at least one stuffer, preferably at least two, wherein each stuffer preferably comprises a vacuum pump, each vacuum pump creating a pressure difference of less than 60 mbar, preferably less than 20 mbar.

The dried mixture at the end of step c had a gravimetric water content of < 500 ppm (0.045 %) as determined according to NREL/TP-510-42621. The extractable hydrophobic agent after step c) was < 1% (0.9 %) as determined in accordance to the Laboratory Analytical Procedure (NREL/TP-510-42619).

**Step d) Blending the dried mixture with the plasticized binder**

After mechanical shearing and drying, the mixture was fed into the throat section of a side feeder via a pressure resistant sealed transfer section. Care was taken that the side-feeder is constantly underfed to avoid piling up of material. For this reason, a twin-screw side feeder (ZSFE 40) with twin auger screws was used for constantly metering the material to the homogenization extruder in the transfer zone at a screw speed of 120 rpm. The side-feeder is attached to the homogenization extruder via a flange to give under-pressure conditions (< 1 atm). This prevents that the extruder is fed with a too high proportion of entrained gas fraction. In this way the extruder is additionally vented by the upstream opening of the deliquification section. The proportion of matrix binder to cellulosic material after step d was 2.33:1 and the ratio of cellulosic material to hydrophobic agent was 10.75:1

The dried mixture after step d) had a hydrophobicity of 0.7 % and a diffusion coefficient of 1 $10^{-6}$ $mm^2/s$ (as determined from the Fickian diffusion model), wherein the hydrophobicity was determined by the water absorption (%) of solid material after storage for at least 24 h in standard climate at 50.0 $\pm$ 5.0 % relative humidity and a temperature of 23.0 $\pm$ 1.0 °C in accordance with DIN EN ISO 62:2008. In contrast to a hydrophobicity of 3 % and a diffusion coefficient of 1 $10^{-4}$ mm2/s, observed for a composite material containing the same proportion of the cellulosic material in a PLA matrix in the absence of a hydrophobic agent.

However, the above embodiment is only one possibility of implementing the invention.

Some other preferable material combinations and the respective processing settings are shown in Table 4. The processing settings in Table 4 refer to the ones aforementioned in example 1. However, with an appropriate adaption of the processing settings, the shown material combinations may also be processed in other devices.

**Table 4** Composite processing conditions and material combinations

| Example No. | Binder Type and relative proportion binder/cellulosic material (by weight) | | | | | | | | | | | | |
|---|---|---|---|---|---|---|---|---|---|---|---|---|---|
| | PLA | PCL | PBS | PHBH | PBAT | PBSA | PHB | PHBV | PBT | PET | PTT | Sub | Cut |
| 1 | 7:3 | - | - | - | - | - | - | - | - | - | - | - | - |
| 2 | 7:3 | - | - | - | - | - | - | - | - | - | - | - | - |
| 3 | 3:7 | - | - | - | - | - | - | - | - | - | - | - | - |
| 5 | 1:1 | - | - | - | - | - | - | - | - | - | - | - | - |
| 6 | 7:3 | - | - | - | - | - | - | - | - | - | - | - | - |
| 7 | - | 7:3 | - | - | - | - | - | - | - | - | - | - | - |
| 8 | - | - | 7:3 | - | - | - | - | - | - | - | - | - | - |
| 9 | - | - | - | 7:3 | - | - | - | - | - | - | - | - | - |
| 10 | - | - | - | - | 7:3 | - | - | - | - | - | - | - | - |
| 11 | - | - | - | - | - | 7:3 | - | - | - | - | - | - | - |
| 12 | - | - | - | - | - | - | 7:3 | - | - | - | - | - | - |
| 13 | - | - | - | - | - | - | - | 7:3 | - | - | - | - | - |
| 14 | - | - | - | - | - | - | - | - | 7:3 | - | - | - | - |
| 15 | - | - | - | - | - | - | - | - | - | 7:3 | - | - | - |
| 16 | - | - | - | - | - | - | - | - | - | - | 7:3 | - | - |
| 17 | - | - | - | - | - | - | - | - | - | - | - | 7:3 | - |
| 18 | - | - | - | - | - | - | - | - | - | - | - | - | 7:3 |
| 19 | 95:5 | - | - | - | - | - | - | - | - | - | - | - | - |
| 20 | 95:5 | - | - | - | - | - | - | - | - | - | - | - | - |
| 21 | 7:3 | - | - | - | - | - | - | - | - | - | - | - | - |
| 22 | 7:3 | - | - | - | - | - | - | - | - | - | - | - | - |
| 23 | 7:3 | - | - | - | - | - | - | - | - | - | - | - | - |
| 24 | 7:3 | - | - | - | - | - | - | - | - | - | - | - | - |
| 25 | 7:3 | - | - | - | - | - | - | - | - | - | - | - | - |
| 26 | 7:3 | - | - | - | - | - | - | - | - | - | - | - | - |
| 27 | 7:3 | - | - | - | - | - | - | - | - | - | - | - | - |
| 28 | 7:3 | - | - | - | - | - | - | - | - | - | - | - | - |
| 29 | 7:3 | - | - | - | - | - | - | - | - | - | - | - | - |
| 30 | 7:3 | - | - | - | - | - | - | - | - | - | - | - | - |
| 31 | 7:3 | - | - | - | - | - | - | - | - | - | - | - | - |
| 32 | 7:3 | - | - | - | - | - | - | - | - | - | - | - | - |
| 33 | 7:3 | - | - | - | - | - | - | - | - | - | - | - | - |
| 34 | 7:3 | - | - | - | - | - | - | - | - | - | - | - | - |
| 35 | 7:3 | - | - | - | - | - | - | - | - | - | - | - | - |
| 36 | 7:3 | - | - | - | - | - | - | - | - | - | - | - | - |
| 37 | 7:3 | - | - | - | - | - | - | - | - | - | - | - | - |
| 38 | 7:3 | - | - | - | - | - | - | - | - | - | - | - | - |
| 39 | 7:3 | - | - | - | - | - | - | - | - | - | - | - | - |

Continuation of Table 4

| Example | Mixture composition (liquid dispersion prior to deliquification) | | | | | | | | | | | | | | | | | | | | | | | |
|---|---|---|---|---|---|---|---|---|---|---|---|---|---|---|---|---|---|---|---|---|---|---|---|---|
| | cellulosic material (%) | | | | | liquid carrier (%) | | hydrophobic agent (%) | | | | | | | | | | processing aid (%) | | | | | | |
| No. | MFC | BC | WF | CEL | NF | $H_2O$ | EtOH | PE-PU | BTAK | LA | OA | CLW | CBW | RW | LO | SO | WO | AF | LT | T80 | TX | LC | BA | TTT |
| 1 | - | - | 43.97 | - | - | 50.78 | - | 4.84 | - | - | - | - | - | - | - | - | - | 0.01 | 0.04 | - | - | - | 0.36 | - |
| 2 | - | - | 43.99 | - | - | 50.81 | - | 4.84 | - | - | - | - | - | - | - | - | - | - | - | - | - | - | 0.36 | - |
| 3 | - | - | 43.99 | - | - | 50.81 | - | 4.84 | - | - | - | - | - | - | - | - | - | - | - | - | - | - | 0.36 | - |
| 5 | - | - | 43.99 | - | - | 50.81 | - | 4.84 | - | - | - | - | - | - | - | - | - | - | - | - | - | - | 0.36 | - |
| 6 | - | - | 43.99 | - | - | 50.81 | - | 4.84 | - | - | - | - | - | - | - | - | - | - | - | - | - | - | 0.36 | - |
| 7 | - | - | 43.99 | - | - | 50.81 | - | 4.84 | - | - | - | - | - | - | - | - | - | - | - | - | - | - | 0.36 | - |
| 8 | - | - | 43.99 | - | - | 50.81 | - | 4.84 | - | - | - | - | - | - | - | - | - | - | - | - | - | - | 0.36 | - |
| 9 | - | - | 43.99 | - | - | 50.81 | - | 4.84 | - | - | - | - | - | - | - | - | - | - | - | - | - | - | 0.36 | - |
| 10 | - | - | 43.99 | - | - | 50.81 | - | 4.84 | - | - | - | - | - | - | - | - | - | - | - | - | - | - | 0.36 | - |
| 11 | - | - | 43.99 | - | - | 50.81 | - | 4.84 | - | - | - | - | - | - | - | - | - | - | - | - | - | - | 0.36 | - |
| 12 | - | - | 43.99 | - | - | 50.81 | - | 4.84 | - | - | - | - | - | - | - | - | - | - | - | - | - | - | 0.36 | - |
| 13 | - | - | 43.99 | - | - | 50.81 | - | 4.84 | - | - | - | - | - | - | - | - | - | - | - | - | - | - | 0.36 | - |
| 14 | - | - | 43.99 | - | - | 50.81 | - | 4.84 | - | - | - | - | - | - | - | - | - | - | - | - | - | - | 0.36 | - |
| 15 | - | - | 43.99 | - | - | 50.81 | - | 4.84 | - | - | - | - | - | - | - | - | - | - | - | - | - | - | 0.36 | - |
| 16 | - | - | 43.99 | - | - | 50.81 | - | 4.84 | - | - | - | - | - | - | - | - | - | - | - | - | - | - | 0.36 | - |
| 17 | - | | 43.99 | - | - | 50.81 | - | 4.84 | - | - | - | - | - | - | - | - | - | - | - | - | - | - | 0.36 | - |
| 18 | - | - | 43.99 | - | - | 50.81 | - | 4.84 | - | - | - | - | - | - | - | - | - | - | - | - | - | - | 0.36 | - |
| 19 | 43.99 | - | - | - | - | 50.81 | - | 4.84 | - | - | - | - | - | - | - | - | - | - | - | - | - | - | 0.36 | - |
| 20 | - | 43.99 | - | - | - | 50.81 | - | 4.84 | - | - | - | - | - | - | - | - | - | - | - | - | - | - | 0.36 | - |
| 21 | - | - | - | 43.99 | - | 50.81 | - | 4.84 | - | - | - | - | - | - | - | - | - | - | - | - | - | - | 0.36 | - |
| 22 | - | - | - | - | 43.99 | 50.81 | - | 4.84 | - | - | - | - | - | - | - | - | - | - | - | - | - | - | 0.36 | - |
| 23 | - | - | 43.99 | - | - | 50.81 | - | - | 4.84 | - | - | - | - | - | - | - | - | - | - | - | - | - | 0.36 | - |
| 24 | - | - | 43.99 | - | - | 40.65 | 8.47 | - | - | 4.84 | - | - | - | - | - | - | - | - | - | 1.69 | - | - | 0.36 | - |
| 25 | - | - | 43.99 | - | - | 40.65 | 8.47 | - | - | 4.84 | - | - | - | - | - | - | - | - | - | 1.69 | - | - | 0.36 | 0.1 |
| 26 | - | - | 43.99 | - | - | 40.65 | 8.47 | - | - | - | 4.84 | - | - | - | - | - | - | - | - | 1.69 | - | - | 0.36 | - |
| 27 | - | - | 43.99 | - | - | 40.65 | 8.47 | - | - | - | - | 4.84 | - | - | - | - | - | - | - | 1.69 | - | - | 0.36 | - |
| 28 | - | - | 43.99 | - | - | 40.65 | 8.47 | - | - | - | - | - | 4.84 | - | - | - | - | - | - | 1.69 | - | - | 0.36 | - |
| 29 | - | - | 43.99 | - | - | 40.65 | 8.47 | - | - | - | - | - | - | 4.84 | - | - | - | - | - | 1.69 | - | - | 0.36 | - |
| 30 | - | - | 43.99 | - | - | 40.65 | 8.47 | - | - | - | - | - | - | - | 4.84 | - | - | - | - | 1.69 | - | - | 0.36 | - |
| 31 | - | - | 43.99 | - | - | 40.65 | 8.47 | - | - | - | - | - | - | - | - | 4.84 | - | - | - | 1.69 | - | - | 0.36 | - |
| 32 | - | - | 43.99 | - | - | 40.65 | 8.47 | - | - | - | - | - | - | - | - | - | 4.84 | - | - | 1.69 | - | - | 0.36 | - |
| 33 | - | - | 43.99 | - | - | 40.65 | 8.47 | - | - | 4.84 | - | - | - | - | - | - | - | - | - | - | 1.69 | - | 0.36 | - |
| 34 | - | - | 43.99 | - | - | 40.65 | 8.47 | - | - | 4.84 | - | - | - | - | - | - | - | - | - | - | - | 1.69 | 0.36 | - |
| 35 | - | - | 43.99 | - | - | 45.61 | - | 9.68 | - | - | - | - | - | - | - | - | - | - | - | - | - | - | 0.72 | - |
| 36 | - | - | 43.99 | - | - | 45.61 | - | - | 9.68 | - | - | - | - | - | - | - | - | - | - | - | - | - | 0.72 | - |
| 37 | - | - | 43.99 | - | - | 50.81 | - | 2.42 | - | 2.42 | - | - | - | - | - | - | - | - | - | - | - | - | 0.36 | - |
| 38 | - | - | 43.99 | - | - | 50.81 | - | 1.21 | - | 3.63 | - | - | - | - | - | - | - | - | - | - | - | - | 0.36 | - |
| 39 | - | - | 43.99 | - | - | 50.81 | - | 3.63 | - | 1.21 | - | - | - | - | - | - | - | - | - | - | - | - | 0.36 | - |

Continuation of Table 4

| Example No. | deliquification extruder | | | homogenization extruder | | |
|---|---|---|---|---|---|---|
| | T (°C) | screw speed (rpm) | feeding (kg/h) | T (°C) | screw speed (rpm) | feeding (kg/h) |
| 1 | 150 | 120 | 42 | 180 | 160 | 46.66 |
| 2 | 150 | 120 | 42 | 180 | 160 | 46.66 |
| 3 | 150 | 120 | 49 | 180 | 160 | 9.99 |
| 5 | 150 | 120 | 49 | 180 | 160 | 23.33 |
| 6 | 150 | 30 | 42 | 180 | 80 | 46.66 |
| 7 | 150 | 120 | 42 | 180 | 160 | 46.66 |
| 8 | 150 | 120 | 42 | 180 | 160 | 46.66 |
| 9 | 150 | 120 | 42 | 180 | 160 | 46.66 |
| 10 | 150 | 120 | 42 | 180 | 160 | 46.66 |
| 11 | 150 | 120 | 42 | 180 | 160 | 46.66 |
| 12 | 150 | 120 | 42 | 180 | 160 | 46.66 |
| 13 | 150 | 120 | 42 | 180 | 160 | 46.66 |
| 14 | 150 | 120 | 42 | 240 | 160 | 46.66 |
| 15 | 150 | 120 | 42 | 240 | 160 | 46.66 |
| 16 | 150 | 120 | 42 | 240 | 160 | 46.66 |
| 17 | 150 | 120 | 42 | 180 | 160 | 46.66 |
| 18 | 150 | 120 | 42 | 180 | 160 | 46.66 |
| 19 | 150 | 30 | 30.63 | 180 | 80 | 277.04 |
| 20 | 150 | 30 | 30.63 | 180 | 80 | 277.04 |
| 21 | 150 | 30 | 42 | 180 | 80 | 46.66 |
| 22 | 150 | 30 | 42 | 180 | 80 | 46.66 |
| 23 | 150 | 120 | 42 | 180 | 160 | 46.66 |
| 24 | 150 | 120 | 42 | 180 | 160 | 46.66 |
| 25 | 150 | 120 | 42 | 180 | 160 | 46.66 |
| 26 | 150 | 120 | 42 | 180 | 160 | 46.66 |
| 27 | 150 | 120 | 42 | 180 | 160 | 46.66 |
| 28 | 150 | 120 | 42 | 180 | 160 | 46.66 |
| 29 | 150 | 120 | 42 | 180 | 160 | 46.66 |
| 30 | 150 | 120 | 42 | 180 | 160 | 46.66 |
| 31 | 150 | 120 | 42 | 180 | 160 | 46.66 |
| 32 | 150 | 120 | 42 | 180 | 160 | 46.66 |
| 33 | 150 | 120 | 42 | 180 | 160 | 46.66 |
| 34 | 150 | 120 | 42 | 180 | 160 | 46.66 |
| 35 | 150 | 120 | 42 | 180 | 160 | 46.66 |
| 36 | 150 | 120 | 42 | 180 | 160 | 46.66 |
| 37 | 150 | 30 | 42 | 180 | 80 | 46.66 |
| 38 | 150 | 30 | 42 | 180 | 80 | 46.66 |
| 39 | 150 | 30 | 42 | 180 | 80 | 46.66 |

## List of abbreviations

### Matrix binder

| | |
|---|---|
| PLA | Polylactic acid |
| PCL | Polycaprolactone |
| PBS | Polybutylene succinate |

| | |
|---|---|
| PHBH | Polyhydroxyalkanoates such as poly(3-hydroxybutyrate-co-3-hydroxyhexanoate) |
| PBAT | Polybutyrate |
| PBSA | Polybutylene succinate adipate |
| PHB | Polyhydroxybutyrat |
| PHBV | Polyhydroxybutyrate-co-hydrovalerate |
| PBT | Polybutylene terephthalate |
| PET | Polyethylene terephthalate |
| PTT | Polytrimethylene terephthalate |
| PC | Polycarbonate |
| Sub | Suberin |
| Cut | Cutin |

**Cellulosic material**

| | |
|---|---|
| MFC | Microfibrillated cellulose (Exilva F 01-V, Borregaard) |
| BC | Bacterial cellulose (Nata de Coco) |
| WF | Wood fiber (WoodForce Natural Fast, Sonae Arauco Deutschland AG) |
| CEL | Man-made cellulose (Viscose, Danufil® KS, 1,7 dtex, 4 mm) |
| NF | Natural fiber (Flax chopped 2mm, Ekotex) |

**Hydrophobic agent**

| | |
|---|---|
| PE-PU | Polyester Polyurethane (Epotal® P100 ECO, BASF) |
| BTAK | BioTAK® S100 (acrylic waterborne adhesive) |
| LA | Linoleic acid |
| OA | Oleic acid |
| CLW | Candelilla wax |
| CBW | Carnauba wax |
| RW | Rice wax |
| LO | Linseed Oil |
| SO | Sunflower Oil |
| WO | Walnut oil |

**Processing aids**

| | | |
|---|---|---|
| AF | Antifoaming agent (Tego® Antifoam 4-94) | Organo-modified siloxane emulsion |
| LT | Surfactant (Lumiten® I-SC) | Polysorbate surfactant with a fatty acid ester moiety and a long polyoxyethylene chain |
| T80 | Surfactant (Tween® 80) | rest Polysorbate with a fatty acid ester moiety and a long chain polyoxyethylene chain with oleic acid as the fatty acid |
| TX | Surfactant (Triton X-100) | Polyoxyethylene containing an alkylphenyl group |
| LC | Surfactant (Lecithin) | phosphatidic acid Mixture of glycerophospholipids including phosphatidylcholine, phosphatidylethanolamine, phosphatidylinositol, |
| BA | Crosslinking agent (Basonat® LR 9056) | A water-emulsifiable polyfunctional isocyanate crosslinker containing hexamethylene diisocyanate (HDI) |
| TTT | Initiator (Trigonox 301) | 3,6,9-Triethyl-3,6,9-trimethyl-1,4,7-triperoxonane in solution (41%) |

## Claims

1. Method for manufacturing a composite material, comprising:

a) Plasticizing a binder in a first extruder, wherein the binder comprises a polymer;
b) Providing a mixture of a cellulosic material and a hydrophobic agent dissolved and/or dispersed in a liquid carrier;
c) Mechanically shearing and drying the mixture in a second extruder whereby liquid is at least partly extracted from the mixture or is not present in liquid form anymore; and
d) Blending the dried mixture with the plasticized binder.

**2.** The method according to claim 1, wherein a mass ratio of hydrophobic agent to cellulosic material is at least 1:200, preferably at least 1:100, more preferably at least 1:50, even more preferably at least 1:20, most preferably at least 1:15.

**3.** The method according to claim 1 or 2, wherein a mass ratio of hydrophobic agent to cellulosic material is at most 2:1, preferably at most 1:1, more preferably at most 1:2, most preferably at most 1:5.

**4.** The method according to any one of the preceding claims, wherein the liquid carrier comprises water and/or an alcohol, preferably an alcohol with 1 to 3 carbon atoms, most preferably 2 carbon atoms, preferably ethanol, optionally processing aids such as an initiator, a cross-linking agent, a surfactant, an emulsifier, a protective colloid that stabilizes the emulsion or dispersion, a biocide, a pigment, a flame retardant and/or an antifoaming agent.

**5.** The method according to any one of the preceding claims, wherein the hydrophobic agent comprises a lipid and/or a polyurethane and/or an acrylate.

**6.** The method according to any one of the preceding claims, wherein the dried mixture after step d) has a hydrophobicity of at most 0.1 % , wherein the hydrophobicity is expressed by the water absorption (%) of solid material after storage for at least 24 h in standard climate (50.0 ± 5.0) % and (23.0 ± 1.0) % relative humidity in accordance with DIN EN ISO 62:2008.

**7.** The method according to any one of the preceding claims, wherein the drying in step c) is performed in a deliquification extruder and optionally comprises heating the mixture.

**8.** The method according to any one of claims 1 to 7, wherein step c) comprises a sequence of one or more mechanical shearing steps and one or more drying steps.

**9.** The method according to any one of the preceding claims, wherein the blend of the dried mixture and the plasticized binder is homogenized, preferably at a temperature of 120°C to 240°C, more preferably at a temperature of 160°C to 230°C.

**10.** The method according to any one of the preceding claims, wherein the mean particle length of the cellulosic material is within the range from 100 nm to 40 mm, preferably from 10 μm to 20 mm, and/or wherein the mean particle width of the cellulosic material is within the range from 5 nm to 10 mm, preferably from 80 nm to 2 mm.

**11.** The method according to any one of the preceding claims, wherein the binder is provided as a granulate material and/or a powder, and wherein the binder is dosed into a main line of an extrusion apparatus, preferably gravimetrically, wherein the main line preferably comprises a hotmelt extruder (2) with a feeding section (4), a plasticization section (6), an inlet section (12) for blending the dried mixture with the plasticized binder and a dispersion section (14), wherein the hotmelt extruder (2) preferably further comprises one or more deliquification sections (8, 10) arranged before the inlet section (12) and/or a compression section (16) arranged behind the dispersion section (14).

**12.** The method according to claim 11, wherein the extruder for shearing and drying the mixture in step c) comprises a deliquification extruder (18) connected to the main line of the extrusion apparatus, preferably to the inlet section (12) of the hotmelt extruder (2), wherein the deliquification extruder (18) preferably comprises a feeding section (22) and a section for shearing and deliquification (24).

**13.** The method according to any of the preceding claims, wherein step b) comprises mixing the cellulosic material with the hydrophobic agent dissolved and/or dispersed in the liquid carrier, preferably in an extruder.

**14.** The method according to claim 13, wherein the cellulosic material, before mixing, has a gravimetric water content which is larger than the gravimetric water content of the dried mixture.

15. The method according to any of the preceding claims, wherein the hydrophobic agent after step c) is bonded covalently and/or via secondary valencies to the cellulosic material, wherein the extractable proportion of the hydrophobic agent after step c) is at most 10%, more preferably at most 5%, most preferably at most 1%, wherein the extractable hydrophobic agent is determined in a two-step (water followed by ethanol) extraction procedure in accordance with the Laboratory Analytical Procedure (NREL/TP-510-42619) for the Determination of Extractives in Biomass, and by correction of the naturally occurring extractives in the cellulosic material.

**Patentansprüche**

1. Verfahren zur Herstellung eines Verbundmaterials, umfassend:

   a) Plastifizieren eines Bindemittels in einem ersten Extruder, wobei das Bindemittel ein Polymer aufweist;
   b) Bereitstellen eines Gemischs aus einem Cellulosematerial und einem hydrophoben Mittel, das in einem flüssigen Träger gelöst und/oder dispergiert ist;
   c) Mechanisches Scheren und Trocknen des Gemischs in einem zweiten Extruder, wodurch Flüssigkeit mindestens teilweise aus dem Gemisch extrahiert wird oder nicht mehr in flüssiger Form vorliegt; und
   d) Mischen des getrockneten Gemischs mit dem plastifizierten Bindemittel.

2. Verfahren nach Anspruch 1, wobei ein Masseverhältnis von hydrophobem Mittel zu Cellulosematerial mindestens 1:200, bevorzugt mindestens 1:100, bevorzugter mindestens 1:50, noch bevorzugter mindestens 1:20 und am meisten bevorzugt 1:15 beträgt.

3. Verfahren nach Anspruch 1 oder 2, wobei ein Masseverhältnis von hydrophobem Mittel zu Cellulosematerial höchstens 2:1, bevorzugt höchstens 1:1, noch bevorzugter höchstens 1:2, und am meisten bevorzugt 1:5 beträgt.

4. Verfahren nach einem der vorstehenden Ansprüche, wobei der flüssige Träger Wasser und/oder einen Alkohol aufweist, bevorzugt einen Alkohol mit 1 bis 3 Kohlenstoffatomen, am meisten bevorzugt mit 2 Kohlenstoffatomen, bevorzugt Ethanol ist und gegebenenfalls Verarbeitungshilfsstoffe wie einen Initiator, ein Vernetzungsmittel, einen oberflächenaktiven Stoff, einen Emulgator, ein Schutzkolloid, das die Emulsion oder Dispersion stabilisiert, ein Biozid, ein Pigment, einen Flammenhemmstoff und/oder ein Antischaummittel umfasst.

5. Verfahren nach einem der vorstehenden Ansprüche, wobei das hydrophobe Mittel ein Lipid und/oder ein Polyurethan und/oder ein Acrylat aufweist.

6. Verfahren nach einem der vorstehenden Ansprüche, wobei das getrocknete Gemisch nach Schritt d) eine Hydrophobie von höchstens 0,1 % aufweist, wobei die Hydrophobie durch die Wasserabsorption (%) des Feststoffs nach mindestens 24 Stunden Lagerung in Normklima (50,0 $\pm$ 5,0) % und (23,0 $\pm$ 1,0) % relative Luftfeuchtigkeit nach DIN EN ISO 62:2008 ausgedrückt wird.

7. Verfahren nach einem der vorstehenden Ansprüche, wobei das Trocknen in Schritt c) in einem Deliquifizierungsextruder ausgeführt wird und gegebenenfalls ein Erwärmen des Gemischs umfasst.

8. Verfahren nach einem der Ansprüche 1 bis 7, wobei Schritt c) eine Abfolge von einem oder mehreren mechanischen Scherschritten und einem oder mehreren Trocknungsschritten umfasst.

9. Verfahren nach einem der vorstehenden Ansprüche, wobei die Mischung mit dem getrockneten Gemisch und dem plastifizierten Bindemittel homogenisiert wird, bevorzugt bei einer Temperatur von 120 °C bis 240 °C, noch bevorzugter bei einer Temperatur von 160 °C bis 230 °C.

10. Verfahren nach einem der vorstehenden Ansprüche, wobei die mittlere Teilchenlänge des Cellulosematerials im Bereich von 100 nm bis 40 mm, bevorzugt von 10 $\mu$m bis 20 mm liegt und/oder wobei die mittlere Teilchenbreite des Cellulosematerials im Bereich von 5 nm bis 10 mm, bevorzugt im Bereich von 80 nm bis 2 mm liegt.

11. Verfahren nach einem der vorstehenden Ansprüche, wobei das Bindemittel als Granulatmaterial und/oder Pulver bereitgestellt wird und wobei das Bindemittel, bevorzugt gravimetrisch, in eine Hauptleitung einer Extrusionsvorrichtung dosiert wird, wobei die Hauptleitung bevorzugt einen Hotmelt-Extruder (2) mit einem Beschickungsabschnitt (4), einem Plastifizierungsabschnitt (6), einem Einlassabschnitt (12) zum Vermischen des getrockneten Gemischs mit dem plastifizierten Bindemittel und einen Dispersionsabschnitt (14) aufweist, wobei der Hotmelt-Extruder (2) bevorzugt ferner einen oder mehrere Deliquifizierungsabschnitte (8, 10), die vor dem Einlassabschnitt (12) angeordnet sind, und/oder einen Kompressionsabschnitt (16), der hinter dem Dispersionsabschnitt (14) angeordnet ist, aufweist.

**12.** Verfahren nach Anspruch 11, wobei der Extruder zum Scheren und Trocknen des Gemischs in Schritt c) einen Deliquifizierungsextruder (18) aufweist, der an die Hauptleitung der Extrusionsvorrichtung angeschlossen ist, bevorzugt an den Einlassabschnitt (12) des Hotmelt-Extruders (2), wobei der Deliquifizierungsextruder (18) bevorzugt einen Beschickungsabschnitt (22) und einen Abschnitt zum Scheren und Deliquifizieren (24) aufweist.

**13.** Verfahren nach einem der vorstehenden Ansprüche, wobei Schritt b) das Mischen des Cellulosematerials mit dem in dem flüssigen Träger gelösten und/oder dispergierten hydrophoben Mittel umfasst, bevorzugt in einem Extruder.

**14.** Verfahren nach Anspruch 13, wobei das Cellulosematerial vor dem Mischen einen gravimetrischen Wassergehalt aufweist, der größer als der gravimetrische Wassergehalt des getrockneten Gemischs ist.

**15.** Verfahren nach einem der vorstehenden Ansprüche, wobei das hydrophobe Mittel nach Schritt c) kovalent und/oder über sekundäre Valenzen an das Cellulosematerial gebunden ist, wobei der extrahierbare Anteil des hydrophoben Mittels nach Schritt c) höchstens 10 %, bevorzugt höchstens 5 %, am meisten bevorzugt höchstens 1 % beträgt, wobei das extrahierbare hydrophobe Mittel in einem zweistufigen Extraktionsverfahren (Wasser gefolgt von Ethanol) entsprechend dem Laboranalyseverfahren (NREL/TP-510-42619) zum Bestimmen von Extraktstoffen in Biomasse und durch Korrektur der natürlich auftretenden Extraktstoffe im Cellulosematerial bestimmt wird.

## Revendications

**1.** Procédé de fabrication d'un matériau composite, comprenant :

a) la plastification d'un liant dans une première extrudeuse, dans lequel le liant comprend un polymère ;
b) la fourniture d'un mélange d'un matériau cellulosique et d'un agent hydrophobe dissous et/ou dispersé dans un support liquide ;
c) le cisaillement mécanique et le séchage du mélange dans une seconde extrudeuse sur quoi du liquide est au moins partiellement extrait du mélange et n'est plus présent dans une forme liquide ; et
d) la combinaison du mélange séché avec le liant plastifié.

**2.** Procédé selon la revendication 1, dans lequel un rapport massique d'agent hydrophobe à matériau cellulosique est d'au moins 1:200, de préférence d'au moins 1:100, encore mieux d'au moins 1:50, bien mieux encore d'au moins 1:20, particulièrement de préférence d'au moins 1:15.

**3.** Procédé selon la revendication 1 ou 2, dans lequel un rapport massique d'agent hydrophobe à matériau cellulosique est d'au plus 2:1, de préférence d'au plus 1:1, encore mieux d'au plus 1:2, bien mieux encore d'au plus 1:5.

**4.** Procédé selon l'une quelconque des revendications précédentes, dans lequel le support liquide comprend de l'eau et/ou un alcool, de préférence un alcool avec de 1 à 3 atomes de carbone, encore mieux 2 atomes de carbone, de préférence l'éthanol, éventuellement des auxiliaires de traitement, tels qu'un initiateur, un agent de réticulation, un tensioactif, un émulsionnant, un colloïde protecteur qui stabilise l'émulsion ou la dispersion, un biocide, un pigment, un retardateur de flamme et/ou un agent antimousse.

**5.** Procédé selon l'une quelconque des revendications précédentes, dans lequel l'agent hydrophobe comprend un lipide et/ou un polyuréthane et/ou un acrylate.

**6.** Procédé selon l'une quelconque des revendications précédentes, dans lequel le mélange séché après l'étape d) présente une hydrophobicité d'au plus 0,1 %, dans lequel l'hydrophobicité est exprimée par l'absorption d'eau (%) de matériau solide après stockage pendant au moins 24 h dans un climat standard d'humidité relative de (50,0 $\pm$ 5,0) % et (23,0 $\pm$ 1,0) % selon DIN EN ISO 62:2008.

**7.** Procédé selon l'une quelconque des revendications précédentes, dans lequel le séchage dans l'étape c) est réalisé dans une extrudeuse de déliquification et comprend éventuellement le chauffage du mélange.

8. Procédé selon l'une quelconque des revendications 1 à 7, dans lequel l'étape c) comprend une succession d'une ou plusieurs étapes de cisaillement mécanique et d'une ou plusieurs étapes de séchage.

9. Procédé selon l'une quelconque des revendications précédentes, dans lequel la combinaison du mélange séché et du liant plastifié est homogénéisée, de préférence à une température de 120°C à 240°C, encore mieux à une température de 160°C à 230°C.

10. Procédé selon l'une quelconque des revendications précédentes, dans lequel la longueur moyenne de particule du matériau cellulosique se trouve dans l'intervalle de 100 nm à 40 mm, de préférence de 10 μm à 20 mm, et/ou dans lequel la largeur moyenne de particule du matériau cellulosique se trouve dans l'intervalle de 5 nm à 10 mm, de préférence de 80 nm à 2 mm.

11. Procédé selon l'une quelconque des revendications précédentes, dans lequel le liant est fourni comme un matériau granulé et/ou une poudre, et dans lequel le liant est dosé dans une ligne principale d'un appareil d'extrusion, de préférence gravimétriquement, dans lequel la ligne principale comprend de préférence une extrudeuse de thermofusion (2) avec une section d'alimentation (4), une section de plastification (6), une section d'entrée (12) pour combiner le mélange séché avec le liant plastifié et une section de dispersion (14), dans lequel l'extrudeuse de thermofusion (2) comprend de plus de préférence une ou plusieurs sections de déliquification (8, 10) disposées devant la section d'entrée (12) et/ou une section de compression (16) disposée derrière la section de dispersion (14).

12. Procédé selon la revendication 11, dans lequel l'extrudeuse pour le cisaillement et le séchage du mélange dans l'étape c) comprend une extrudeuse de déliquification (18) connectée à la ligne principale de l'appareil d'extrusion, de préférence à la section d'entrée (12) de l'extrudeuse de thermofusion (2), dans lequel l'extrudeuse de délifiquification (18) comprend de préférence une section d'alimentation (22) et une section pour cisaillement et déliquification (24).

13. Procédé selon l'une quelconque des revendications précédentes, dans lequel l'étape b) comprend le mélange du matériau cellulosique avec l'agent hydrophobe dissous et/ou dispersé dans le support liquide, de préférence dans une extrudeuse.

14. Procédé selon la revendication 13, dans lequel le matériau cellulosique, avant mélange, présente une teneur en eau gravimétrique qui est supérieure à la teneur en eau gravimétrique du mélange séché.

15. Procédé selon l'une quelconque des revendications précédentes, dans lequel l'agent hydrophobe après l'étape c) est lié de manière covalente et/ou via des valences secondaires au matériau cellulosique, dans lequel la proportion extractible de l'agent hydrophobe après l'étape c) est d'au plus 10 %, encore mieux d'au plus 5 %, bien mieux encore d'au plus 1 %, dans lequel l'agent hydrophobe extractible est déterminé dans une procédure d'extraction en deux étapes (eau suivie par méthanol) selon la procédure analytique de laboratoire (NREL/TP-510-42619) pour la détermination d'extraits dans la biomasse, et par correction des extraits existants naturellement dans le matériau cellulosique.

2
Polymer(s) + Additive(s)
Vacuum system
Athmospheric venting
Homogenization extruder
Feeding section 4
Plastification section 6
Venting section 8
Degassing section 10
Fiber inlet section 12
Dispersion section 14
Compression section 16
Flange
Composite material
Temperature control
Flange
Feeder 30
Subsequent devices for processing: gear pump, nozzle, granulator, etc.
Flange
Material transfer 26
Temperature control
Degassing and shearing 24
Port
Stuffer
Vacuum System
Port
Stuffer
Vacuum System
Feeding and wetting 22
Liquid dosing system
Liquid carrier + hydrophobic agent ( + processing additives)
Solid feeding
Cellulosic material
18
Deliquification extruder

Fig. 1

28
22a
22b
24a
24b
24c
24d
24e
26
feeding solid phase
feeding liquid phase
degassing
degassing
12 screws
to homogenization extruder
pitch
helix angle
CE
CE
CE
ME
CE
KE
CE
CE
KE
CE
CE
CE
OCN
U
chain extender
U
hydrolysable aliphatic polyester / urea
U
chain extender
U
hydrophilic segement
NCO

Fig. 2

Fig. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 9504779 A1
- US 7080935 B2
- DE 19604228
- EP 1400337 B1
- EP 2556953 A1
- EP 2550090 B1
- WO 2000068335 A1
- WO 2012140174 A1
- US 3905929 A
- US 6716911 B2


### Non-patent literature cited in the description


- **CHRIS RAUWENDAAL.** Polymer Extrusion. January 2014, 950
- **GARDNER DJ ; MURDOCK D.** *Extrusion of Wood Plastic Composites,* 2002, http)://www.entwoodllc.com/PDF/Extrusion%20Paper%2010-11-02.pdf
- **PHILIP J. BRUNNER ; JOSHUA T. CLARK ; JOHN M. TORKELSON ; KATSUYUKI WAKABAYASHI.** Processing-Structure-Property Relationships in Solid-State Shear Pulverization: Parametric Study of Specific Energy. *Polymer Engineering and Science,* 2012, vol. 52 (7), 1555-1564